(19) Europäisches Patentamt / European Patent Office / Office européen des brevets

(11) **EP 3 776 471 B1**

(12) **FASCICULE DE BREVET EUROPEEN**

(45) Date de publication et mention de la délivrance du brevet:
**21.08.2024 Bulletin 2024/34**

(21) Numéro de dépôt: **20713676.3**

(22) Date de dépôt: **31.03.2020**

(51) Classification Internationale des Brevets (IPC):
***G06T 7/73*** *(2017.01)*

(52) Classification Coopérative des Brevets (CPC):
**G06T 7/73; B64G 1/6462**

(86) Numéro de dépôt international:
**PCT/EP2020/059024**

(87) Numéro de publication internationale:
**WO 2020/201239 (08.10.2020 Gazette 2020/41)**

(54) **PROCÉDÉ POUR LA LOCALISATION D'UNE CIBLE À PARTIR D'UN CONTOUR ELLIPTIQUE**

VERFAHREN ZUM AUFFINDEN EINES ZIELS AUS EINER ELLIPTISCHEN KONTUR

METHOD FOR LOCATING A TARGET FROM AN ELLIPTICAL CONTOUR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2019 FR 1903647**

(43) Date de publication de la demande:
**17.02.2021 Bulletin 2021/07**

(73) Titulaire: **Airbus Defence and Space SAS**
**31402 Toulouse Cedex 4 (FR)**

(72) Inventeur: **FALCOZ, Alexandre**
**31402 TOULOUSE Cedex 4 (FR)**

(74) Mandataire: **Plasseraud IP**
**104 Rue de Richelieu**
**CS92104**
**75080 Paris Cedex 02 (FR)**

(56) Documents cités:
- **JEAN-NICOLAS OUELLET ET AL: "Precise ellipse estimation without contour point extraction", MACHINE VISION AND APPLICATIONS, SPRINGER, BERLIN, DE, vol. 21, no. 1, 7 May 2008 (2008-05-07), pages 59 - 67, XP019755540, ISSN: 1432-1769**
- **CAI JIA ET AL: "An efficient circle detector not relying on edge detection", ADVANCES IN SPACE RESEARCH, ELSEVIER, AMSTERDAM, NL, vol. 57, no. 11, 21 March 2016 (2016-03-21), pages 2359 - 2375, XP029521890, ISSN: 0273-1177, DOI: 10.1016/J.ASR.2016.03.026**
- **LIU CHANG ET AL: "Effective method for ellipse extraction and integration for spacecraft images", OPTICAL ENGINEERING, SOC. OF PHOTO-OPTICAL INSTRUMENTATION ENGINEERS, BELLINGHAM, vol. 52, no. 5, 1 May 2013 (2013-05-01), pages 57002, XP060025832, ISSN: 0091-3286, [retrieved on 20130507], DOI: 10.1117/1.OE.52.5.057002**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 3 776 471 B1**

**Description**

**Domaine technique**

La présente demande concerne un procédé de traitement d'une image d'une cible, pour la localisation de la cible par rapport à un véhicule, la cible présentant au moins un composant externe tridimensionnel présentant une surface quadratique. L'invention s'inscrit dans un contexte de rendez-vous aérien ou spatial.

**Technique antérieure**

Un exemple de rendez-vous spatial est typiquement l'arrimage d'un véhicule spatial à une cible telle que la Station Spatiale Internationale. Un autre exemple est l'arrimage d'un satellite à un autre satellite. Lors d'un tel rendez-vous, un véhicule d'approche mobile doit se positionner précisément relativement à une cible mobile, dont la structure tridimensionnelle peut être complexe. La navigation du véhicule d'approche est essentiellement basée sur l'analyse des images de la cible mobile prises depuis le véhicule d'approche, afin de déterminer avec exactitude la pose de la cible mobile, c'est-à-dire sa position relative et son orientation par rapport au véhicule d'approche.

Pour ce faire, on connaît des algorithmes de détection et de suivi de cibles, qui utilisent un modèle tridimensionnel de la cible. Ces algorithmes comprennent l'acquisition d'une ou plusieurs images de la cible depuis le véhicule, et l'estimation de la pose de la cible mobile à partir du modèle tridimensionnel de la cible. Un exemple d'un tel algorithme est par exemple décrit dans la publication de A. Petit et al. « Vision-based Space Autonomous Rendezvous : A Case Study », publiée dans 2011 IEEE/RSJ International Conférence on Intelligent Robots and Systems, 25-30 septembre 2011.

Ce type d'algorithme présente plusieurs inconvénients, et en particulier il implique des calculs lourds liés d'une part au fait de devoir charger et manipuler un modèle tridimensionnel de la cible, et d'autre part à l'algorithme en lui-même. Ceci implique un temps de calcul important qui n'est pas toujours compatible avec l'exigence de détection et de suivi de la cible en temps réel. Si l'algorithme est mis en oeuvre à bord du véhicule, il faut donc charger à bord du véhicule du matériel spécial, tandis que s'il est mis en oeuvre au sol, il faut s'assurer d'échanges suffisamment rapide entre le véhicule et le sol pour que le véhicule puisse suivre la cible avec précision.

Un autre problème lié à l'utilisation par l'algorithme de détection et de suivi de cible d'un modèle tridimensionnel de la cible est que l'algorithme ne peut pas être décliné facilement à différents types de cible, puisque le modèle tridimensionnel est propre à un type de cible en particulier. Il faut donc prévoir autant de modèles que de type de cibles.

Il existe donc un besoin pour une alternative moins complexe et pouvant être déclinée facilement sur différents types de cibles. La publication de JEAN-NICOLAS OUELLET ET AL. « Precise ellipse estimation without contour point extraction », dans MACHINE VISION AND APPLICATIONS, SPRINGER, BERLIN, DE, vol. 21, no.1 (1007-05-07), pages 59-67, divulguer une méthode qui estime les paramètres d'une ellipse à partir du gradient des pixels qui se trouvent près du contour de l'ellipse. La publication de CAI JIA et al. Intitulée « An efficient circle detector not relying on edge détection" dans ADVANCES IN SPACE RESEARCH, ELSEVIER, AMSTERDAM, NL, vol. 57, no.11 (2016-03-21), pages 2359-2375, décrit la détection d'un cercle à partir du calcul de gradients d'intensité des pixels de l'image et d'histogrammes de distributions de distances euclidiennes à partir des gradients. La publication de Liu Chang et al. intitulée « Effective Method for ellipse extraction and intégration for spacecraft images" dans OPTICAL ENGINEERING, SOC. OF PHOTO-OPTICAL INSTRUMENTATION ENGINEERS, BELLINGHAM, vol. 52, no.5 (2013-05-01), page 57002, divulgue une méthode pour détecter des cercles et des ellipses pour des applications spatiales.

**Résumé**

L'invention a pour but de fournir une amélioration aux solutions existantes pour la détection d'une cible depuis un véhicule.

En particulier, un but de l'invention est de proposer un procédé pour la localisation d'une cible de mise en oeuvre rapide et peu coûteuse en capacités de calculs.

Un autre but de l'invention est de pouvoir être mise en oeuvre sur différents types ou modèles de cibles.

A cet égard, l'invention a pour objet un procédé pour la localisation d'une cible par rapport à un véhicule, selon la revendication 1.

Dans un mode de réalisation, la zone d'intérêt est une ellipse délimitée autour du contour elliptique de l'image, et le calcul d'un gradient d'intensité est mis en oeuvre pour l'ensemble des pixels de la zone d'intérêt de l'image.

L'étape de sélection des droites tangentes au contour elliptique comprend :

- le calcul, pour chaque pixel, d'un angle formé par la droite présentant une direction normale au gradient en ledit pixel et par une droite reliant ledit pixel à un centre estimé du contour elliptique, et

- la sélection de la droite présentant une direction normale au gradient en ledit pixel comme tangente au contour elliptique si l'angle calculé est égal à un angle droit moyennant une tolérance prédéterminée.

Dans un mode de réalisation, l'estimation des paramètres du contour elliptique est mise en oeuvre par un algorithme de moindres carrés.

Dans un mode de réalisation, le procédé comprend en outre, une fois les tangentes au contour elliptique sélectionnées, l'élaboration d'un histogramme desdites tangentes en fonction de la distance entre un centre estimé du contour elliptique et le pixel en lequel est calculée respectivement chaque tangente.

L'histogramme peut comprendre deux pics correspondants respectivement à un bord interne et un bord externe sur l'image du contour elliptique, et le procédé comprend alors la répartition des tangentes en deux ensembles correspondant respectivement à chaque bord, et l'étape d'estimation des paramètres du contour elliptique sur l'image est mise en oeuvre respectivement pour le bord interne et pour le bord externe, à partir des paramètres des tangentes appartenant respectivement aux deux ensembles.

Dans un mode de réalisation, l'étape d'acquisition de l'image de la cible comprenant une zone d'intérêt comprend une étape d'acquisition d'une image de la cible dans laquelle le composant tridimensionnel externe est visible sous la forme d'un contour elliptique, et une étape de délimitation d'une zone d'intérêt autour dudit contour.

La délimitation de la zone d'intérêt peut être mise en oeuvre à partir d'une estimation précédente de la position de la cible relativement au véhicule et de la trajectoire du véhicule par rapport à la cible.

L'invention a également pour objet un produit programme d'ordinateur, comprenant des instructions de code pour la mise en oeuvre du procédé selon la description qui précède, lorsqu'il est mis en oeuvre par un calculateur.

L'invention porte également sur un calculateur configuré pour la mise en oeuvre du procédé selon la description qui précède.

Le procédé proposé par l'invention repose sur l'analyse de la projection sur une image d'un composant externe tridimensionnel d'une cible présentant une surface quadratique, ce qui est typiquement le cas d'une tuyère, d'un anneau d'interface lanceur de satellite, la plupart les satellites étant équipés d'un tel anneau, ou encore d'un anneau d'arrimage de module spatial comme la station spatiale internationale.

La détection de la cible et l'estimation de sa position relative par rapport au véhicule peut-être réalisée en paramétrant l'ellipse formée par ce composant externe tridimensionnel sur une image de la cible acquise depuis le véhicule. Il n'est donc pas nécessaire de manipuler un modèle tridimensionnel complexe de la cible et les temps et/ou capacités de calculs nécessaires à la mise en oeuvre du procédé sont diminués.

De plus, l'absence de recours à un modèle de la cible rend le procédé utilisable sur une grande variété de cibles, pourvu qu'elles présentent un composant externe présentant une surface quadratique, ce qui est le cas de la plupart des engins spatiaux.

Dans certains cas, une précision accrue de détection peut être obtenue en réalisant un traitement de détection spécifique pour le bord interne et le bord externe du contour elliptique apparaissant sur l'image (qui est la projection sur l'image du composant externe présentant une surface quadratique de la cible).

## Brève description des dessins

D'autres caractéristiques, détails et avantages apparaîtront à la lecture de la description détaillée ci-après, et à l'analyse des dessins annexés, sur lesquels :

**Fig. 1**

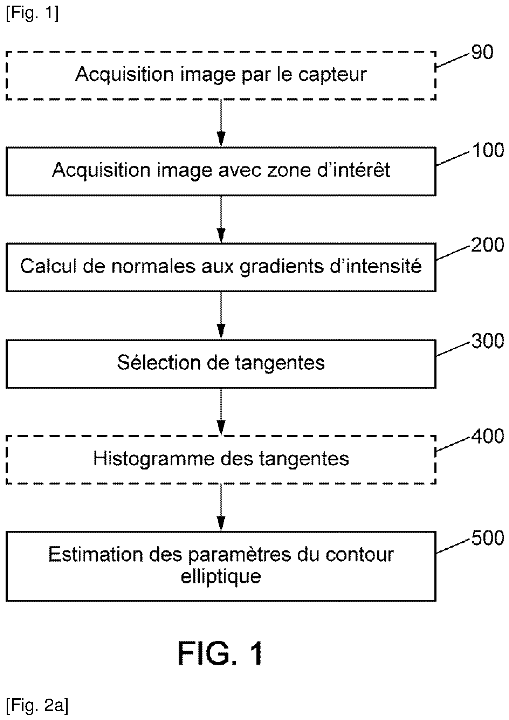

[Fig. 1] illustre schématiquement les principales étapes d'un procédé pour la localisation d'une cible selon un mode de réalisation de l'invention.

**Fig. 2a**

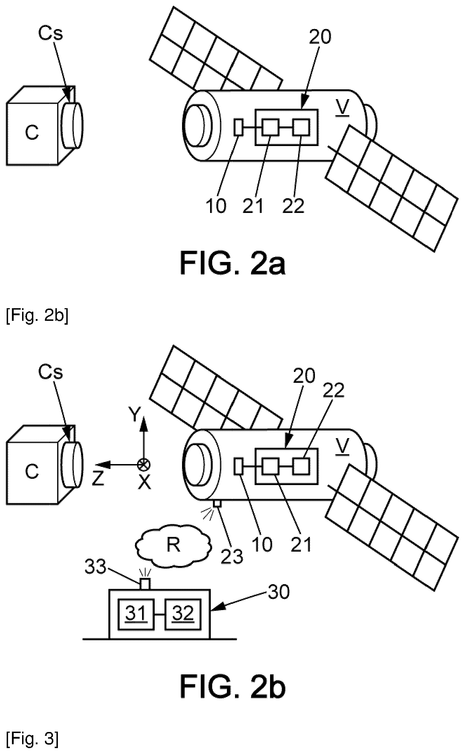

[Fig. 2a] représente schématiquement une première variante d'un système permettant l'implémentation du procédé.

**Fig. 2b**
[Fig. 2b] représente schématiquement une deuxième variante d'un système permettant l'implémentation du procédé.

**Fig. 3**

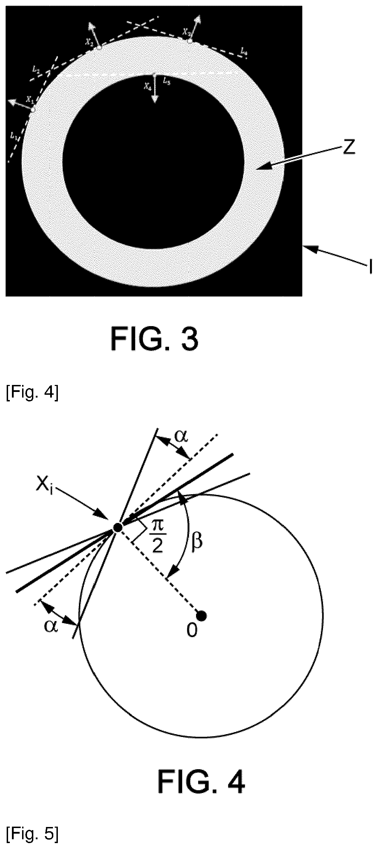

[Fig. 3] illustre le calcul des gradients en certains pixels d'une zone d'intérêt d'une image.

**Fig. 4**
[Fig. 4] représente la mise en oeuvre de la sélection des tangentes.

**Fig. 5**

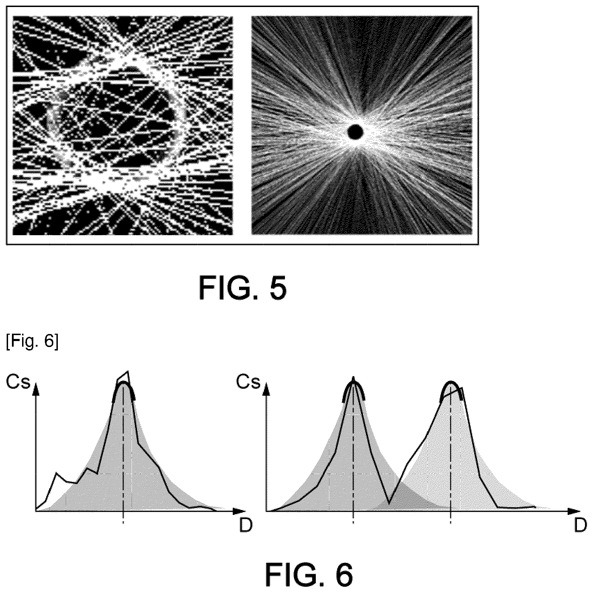

[Fig. 5] représente les tangentes calculées en chaque pixel de la zone d'intérêt d'une image respectivement avant et après la sélection des tangentes.

**Fig. 6**

[Fig. 6] représente deux exemples d'histogrammes de tangentes en fonction de la distance au centre estimé du contour elliptique sur l'image.

**Description des modes de réalisation**

On va maintenant décrire les principales étapes d'un procédé pour la localisation d'une cible par rapport à un véhicule selon un mode de réalisation de l'invention. En référence aux figures 2a et 2b, ce procédé s'inscrit avantageusement dans un contexte de rendez-vous spatial ou aérien, où un véhicule tel qu'un vaisseau spatial ou un aéronef acquiert un flux d'images d'une cible dont il se rapproche, détermine la pose de la cible par une analyse en temps-réel des images acquises, et adapte en temps-réel les commandes de navigation du véhicule en fonction de la pose ainsi déterminée.

Comme on le verra plus en détails par la suite, ce procédé est donc avantageusement mis en oeuvre en temps-réel sur un flux d'images, à une fréquence correspondant à la fréquence d'acquisition des images, qui dépend du mouvement relatif entre les deux objets, et qui peut être comprise de 0.1 Hz à 100 Hz.

Sur la figure 2a on a représenté un premier mode de réalisation d'un système pour la mise en oeuvre du procédé. Ce système comprend un capteur 10, embarqué dans un véhicule V et adapté pour acquérir des images de la cible C. Le capteur 10 peut être un dispositif de télédétection par laser ou LIDAR (acronyme de la terminologie anglais « LIght Détection And Ranging »), ou une caméra monoculaire ou stéréo.

Le système comprend en outre une unité de contrôle 20 comprenant au moins un calculateur 21 et une mémoire 22. Le calculateur est par exemple un processeur ou un microprocesseur.

La mémoire stocke les instructions de code nécessaires à la mise en oeuvre de tout ou partie du procédé, et le calculateur est adapté pour exécuter ces instructions de code.

Dans une variante de réalisation représentée sur la figure 2b, une partie du procédé peut être mise en oeuvre au sol pour alléger encore les calculs mis en oeuvre par le calculateur 21 embarqué, et le cas échéant permettre la mise en oeuvre de traitements supplémentaires qui ne pourraient pas être réalisés par le calculateur 21. Ceci peut également permettre une uniformité des traitements mis en oeuvre par le système au sol pour plusieurs véhicules embarqués équipés de capacités de traitement différentes.

Dans ce cas, le système comprend en outre une unité de traitement 30 au sol, comprenant une mémoire 32 et un calculateur 31. Le calculateur 31 et la mémoire 32 peuvent alors présenter des performances et des caractéristiques supérieures au calculateur 21 et à la mémoire 22, car ils ne sont pas contraints par les mêmes problématiques d'intégration et d'alimentation que dans le véhicule V.

Avantageusement, le système peut en outre comprendre des moyens de communication entre l'unité de traitement au sol 30 et l'unité de traitement embarquée 20, ces moyens de communication comprenant avantageusement de part et d'autre des interfaces de connexion sans-fil 23,33, à un réseau T de communication tel qu'internet, par exemple par Wi-Fi, 3G, 4G ou encore par communication satellitaire.

La cible C est un engin comprenant un composant Cs externe tridimensionnel présentant une surface quadratique. La surface quadratique peut être par exemple : un cylindre, un cône ou un tronc de cône, une sphère, un paraboloïde de révolution ou un tronçon de paraboloïde de révolution.

Selon un premier exemple avantageux, la cible C peut être un satellite, un module d'une station spatiale, ou tout autre engin spatial dont le composant Cs externe tridimensionnel présentant une surface quadratique est un anneau d'interface lanceur. Dans ce cas la surface quadratique est un cylindre ou un tronc de cône. Selon un deuxième exemple avantageux, la cible C peut être un satellite, ou un engin spatial dont le composant Cs externe tridimensionnel présentant une surface quadratique est une tuyère de moteur d'apogée à propergol liquide, également connu sous la terminologie LAE (acronyme anglais de Liquid Apogee Engine). Dans ce cas la surface quadratique est un tronc de cône, une parabole ou un tronc de parabole.

En variante, le composant Cs externe tridimensionnel de la cible peut présenter une forme sphérique.

Les dimensions du composant externe tridimensionnel Cs présentant une surface quadratique de la cible sont connues d'après le modèle de la cible, ces dimensions étant stockées dans la mémoire 22 du système 20 du véhicule ou dans la mémoire 32 du système 30 au sol. Par exemple, pour le cas où ce composant est un anneau d'interface lanceur, les dimensions comprennent au moins le diamètre de l'anneau. Les dimensions peuvent également comprendre une épaisseur de l'anneau, c'est-à-dire la dimension séparant la paroi interne de l'anneau de la paroi externe.

Pour le cas où le composant Cs est une tuyère de moteur d'apogée à propergol liquide, les dimensions peuvent comprendre le diamètre maximal de la tuyère, au niveau de son embouchure, ainsi que l'épaisseur de la tuyère.

En référence à la figure 1, on a représenté les principales étapes d'un procédé pour la localisation d'une cible selon un mode de réalisation de l'invention, le procédé étant mis en oeuvre par le calculateur 21 du véhicule ou le calculateur 31 du système au sol. Ce procédé repose sur le traitement d'une image de la cible où le composant externe tridimensionnel Cs de la cible apparaît sous la forme d'un contour elliptique, et comprend le paramétrage de ce contour elliptique. Ce paramétrage permet d'en déduire ensuite, la géométrie du composant Cs étant connue, la distance entre le véhicule et la cible ainsi que la position relative de la cible par rapport au véhicule.

Le procédé comprend une première étape 100 d'acquisition, par le calculateur 21, 31, d'une image I de la cible C, l'image comprenant une zone d'intérêt Z délimitée dans laquelle le composant externe tridimensionnel Cs de la cible C est visible sous la forme d'un contour elliptique.

L'image de la cible C est acquise par le capteur 10 du véhicule V. La forme de la projection du composant externe tridimensionnel Cs de la cible sur l'image dépend essentiellement de la position du capteur 10 relativement à ce composant lors de l'acquisition de l'image. En effet, pour toutes les formes de surfaces quadratiques données ci-avant, il existe au moins un plan tel que la projection d'une de ces surfaces sur un plan soit une ellipse. De fait, l'acquisition d'une image dont le plan de l'objet est parallèle à un tel plan permet d'obtenir un contour elliptique du composant Cs sur l'image.

Par exemple, pour que ce composant Cs forme, sur l'image, un contour elliptique, dans le cas d'un anneau d'interface lanceur ou d'une tuyère de moteur d'apogée, le capteur 10 doit se trouver de préférence en regard de l'anneau ou de l'embouchure de la tuyère, comme illustré schématiquement sur les [Fig. 2a] et [Fig. 2b], ce qui est très souvent le cas lors d'une phase d'approche. Il n'est cependant pas nécessaire que le capteur 10 soit aligné avec l'axe de l'anneau ou de la tuyère.

De préférence, la forme de la zone d'intérêt correspond à celle du contour elliptique, c'est-à-dire qu'elle présente elle-même une forme d'ellipse, et ses dimensions sont adaptées en fonction des dimensions du contour elliptique, de sorte que la zone d'intérêt comprenne le moins possible de pixels de l'image n'appartenant pas au contour elliptique.

Dans un mode de réalisation, l'étape 100 est mise en oeuvre par le calculateur 21 du véhicule et comprend l'acquisition de l'image de la cible par le capteur du véhicule, et la délimitation de la zone d'intérêt autour du contour elliptique.

Dans un autre mode de réalisation, l'image de la cible est acquise par le capteur du véhicule lors d'une étape 90, puis cette image est envoyée au sol, où la zone d'intérêt est délimitée autour du contour elliptique soit par le calculateur 31 du système au sol, soit par un opérateur, puis l'image sur laquelle la zone d'intérêt est délimitée est renvoyée au calculateur 21 du véhicule V, qui la reçoit lors de l'étape 100, pour la mise en oeuvre de la suite des traitements.

Selon encore un autre mode de réalisation, l'image de la cible est acquise par le capteur du véhicule lors d'une étape 90, puis cette image est envoyée au sol, où la zone d'intérêt est délimitée autour du contour elliptique par le calculateur 31 ou par un opérateur lors de l'étape 100, et la suite des traitements est mise en oeuvre par le calculateur 31. En variante la zone d'intérêt peut être délimitée par le calculateur 21 avant l'envoi de l'image au système au sol, et l'étape 100 comprend alors la réception de l'image sur laquelle la zone d'intérêt a déjà été délimitée.

Dans les cas où la zone d'intérêt est délimitée par un calculateur 21, 31, cette délimitation peut être mise en oeuvre avantageusement à partir d'une itération précédente de l'estimation de la position de la cible par rapport au véhicule, et de la trajectoire du véhicule par rapport à la cible. Par exemple, dans le cas d'une trajectoire en ligne droite dirigée vers le composant externe tridimensionnel Cs de la cible, on peut considérer que le centre du contour elliptique est le même qu'à l'estimation précédente, et on peut estimer un ou chaque rayon du contour elliptique à partir d'une variation par rapport au(x) rayon(s) précédent(s) et de la trajectoire et des vitesses respectives du véhicule et de la cible.

Le procédé comprend ensuite une étape 200 de calcul, pour chacun d'une pluralité de pixels de la zone d'intérêt de l'image, d'un gradient d'intensité de l'image autour du pixel. Dans un mode de réalisation, cette étape est mise en oeuvre pour l'ensemble des pixels de la zone d'intérêt de l'image.

Deux axes orthogonaux X,Y, étant définis sur l'image, pour un pixel $X_i$ de l'image de coordonnées $(x_i, y_i)$, le gradient d'intensité de l'image autour du pixel est défini par :

$$\nabla I(x_i, y_i) = [\nabla_x I(x_i, y_i), \nabla_y I(x_i, y_i)]^T$$

Où $\nabla_x$ est la variation d'intensité de l'image dans la direction X autour du pixel, et $\nabla_y$ est la variation d'intensité de l'image dans la direction Y autour du pixel.

Lors de la même étape 200, le calculateur 21, 31 détermine ensuite, pour chaque pixel pour lequel le gradient d'intensité de l'image a été calculé, les paramètres d'une droite présentant une direction normale au gradient en ledit pixel. En effet, dans le cas où le gradient calculé en un pixel est non nul, il est possible de définir les paramètres $[a_i, b_i, c_i]^T$ de la droite $L(x_i, y_i)$ d'équation $ax_i + by_i + c_i = 0$, passant par le pixel i $(x_i, y_i)$ et ayant une direction normale au gradient comme suit :

$$L_i(x_i, y_i) = \left[ a = \frac{\nabla_x I(x_i, y_i)}{\|\nabla I(x_i, y_i)\|}, b = \frac{\nabla_y I(x_i, y_i)}{\|\nabla I(x_i, y_i)\|}, c = -\frac{\nabla_x I(x_i, y_i)x_i + \nabla_y I(x_i, y_i)y_i}{\|\nabla I(x_i, y_i)\|} \right]$$

Or, comme visible par exemple sur la figure 3, les pixels de la zone d'intérêt pour lesquels le gradient d'intensité est non nul sont les bords du contour elliptique sur l'image, et la droite de direction normale au gradient d'intensité de l'image en ces points est en réalité une tangente au contour elliptique. Ainsi l'étape 200 permet de déterminer les paramètres de tangentes au contour elliptique, pour ensuite pouvoir estimer ledit contour.

Cependant, comme visible par exemple sur l'illustration de gauche de [Fig. 5], certaines droites calculées à l'étape 200 peuvent comprendre des droites parasites qui ne sont pas des tangentes au contour elliptique. La présence de ces droites peut par exemple résulter de variations d'intensité liées à des textures visibles sur l'image ou occasionnées par des revêtements de type revêtement thermiques, ou encore d'irrégularités du contour elliptique liées par exemple à des petites pièces saillantes telles que des pièces de fixation.

Ainsi le procédé comprend une étape 300 de sélection, parmi l'ensemble des droites dont des paramètres ont été calculés à l'étape 200, de celles qui sont tangentes au contour elliptique. Pour ce faire, en référence à [Fig. 4], pour chaque pixel pour lequel les paramètres de la droite normale au gradient d'intensité de l'image en ledit pixel ont été calculés, le calculateur 21, 31 calcule l'angle β formé par cette droite normale avec une droite reliant le pixel avec le centre estimé O du contour elliptique.

Le centre estimé O du contour elliptique peut être déterminé automatiquement par reconnaissance de forme, par exemple en même temps que la délimitation de la zone d'intérêt autour dudit contour. En variante, si la zone d'intérêt est délimitée par un opérateur, le centre estimé O du contour elliptique peut être indiqué par l'opérateur lors de la même étape.

Sur l'exemple non limitatif de la [Fig. 4], le contour elliptique est un cercle, dans le cas où il s'agit d'une ellipse le centre estimé du contour elliptique est l'intersection entre le grand axe et le petit axe de l'ellipse. Sur cette figure, on a représenté la droite passant par un pixel i et le centre estimé O du contour elliptique en pointillés, et une autre droite en pointillés, perpendiculaire à la première. En traits pleins sont représentées deux droites passant par le pixel i et formant un angle α avec cette perpendiculaire, ces droites représentent la tolérance admise pour qu'une droite normale au gradient d'intensité de l'image en un pixel soit considérée comme une tangente au contour elliptique. α est de préférence inférieur ou égal à 10°, par exemple égal à 5°. En trait gras est représentée la normale au gradient d'intensité de l'image calculée pour le pixel i.

Lors de l'étape 300, le calculateur 21,31 détermine si l'angle β calculé est égal à π/2 moyennant la tolérance α :

$$\left| \beta - \frac{\pi}{2} \right| \leq \alpha$$

Si c'est le cas, alors le calculateur 21,31 sélectionne la droite considérée comme une tangente au contour elliptique.

Sur l'illustration de droite de [Fig. 5], sont illustrées les droites qui ont été sélectionnées par la mise en oeuvre de l'étape 300 à partir des droites de l'illustration de gauche. On remarque qu'il n'y a plus que des tangentes au contour, et notamment plus aucune droite traversant le contour elliptique.

Le procédé comprend ensuite une étape 500 d'estimation des paramètres du contour elliptique à partir des tangentes qui ont été sélectionnées à l'étape 300.

La projection du composant tridimensionnel Cs de la cible sur l'image est un contour elliptique qui peut être modélisé par l'équation suivante : $f(x,y) := Ax^2 + Bxy + Cy^2 + Dx + Ey + F = 0$, que l'on peut reformuler de façon équivalente, pour un point Xi (xi, yi) :

$$X_i^T H X_i = \begin{bmatrix} x_i & y_i & 1 \end{bmatrix} \begin{bmatrix} A & \frac{B}{2} & \frac{D}{2} \\ \frac{B}{2} & C & \frac{E}{2} \\ \frac{D}{2} & \frac{E}{2} & F \end{bmatrix} \begin{bmatrix} x_i \\ y_i \\ 1 \end{bmatrix}$$

On note θ le vecteur $[A,B,C,D,E,F]^T$ des paramètres du contour elliptique que l'on cherche à estimer.

Pour chaque point $X_i$ pour lequel les paramètres d'une tangente $L_i$ au contour elliptique ont été calculés, on a

la relation suivante : L$_i$=HX$_i$ et :

$$X_i^T H X_i = X_i^T H^T (H^T)^{-1} H X_i = (H X_i)^T H^{-1} (H X_i) = L_i H^{-1} L_i = 0$$

L'estimation du vecteur θ des paramètres du contour elliptique peut être mise en oeuvre à partir de l'ensemble de points X$_i$ pour lesquels une tangente au contour elliptique a été calculée, au moyen d'un algorithme des moindres carrés, par :

$$\hat{\theta} = argmin(\sum_i (X_i^T H X_i)^2)$$

Qui devient d'après l'équation précédente :

$$\hat{\theta} = argmin\left(\sum_i (L_i H^{-1} L_i)^2\right)$$

De plus, compte-tenu de la forme elliptique du contour, une contrainte supplémentaire 4AC-B$^2$=1 peut être fixée. L'utilisation des paramètres des tangentes dans un algorithme des moindres carrés permet donc d'estimer avec précision la forme de ce contour elliptique sur l'image.

La géométrie du composant externe tridimensionnel Cs de la cible C étant connue, on peut ensuite en déduire avec précision la position relative (incluant la distance et la pose) de la cible par rapport au véhicule.

Avantageusement, mais facultativement, le procédé peut également comprendre une étape 400 qui est mise en oeuvre après l'étape de sélection des tangentes et avant l'étape d'estimation des paramètres du contour elliptique sur l'image. Lors de cette étape 400, le calculateur 21,31 réalise un histogramme des tangentes sélectionnées en fonction de la distance des tangentes entre le centre estimé du contour elliptique et le pixel en lequel a été calculée chaque tangente. L'histogramme indique donc le nombre de tangentes N en fonction de la distance D entre le pixel où est calculée une tangente et le centre.

Deux exemples d'histogrammes ont été représentés en [Fig. 6]. Le fait de réaliser cet histogramme permet de révéler respectivement un unique pic (illustration de gauche sur la figure 6) ou deux pics (illustration de droite sur la figure 6). Le cas d'un pic unique correspond au cas où les bords interne et externe du contour elliptique ne peuvent pas être distingués l'un de l'autre, typiquement quand la distance entre la cible et le véhicule est trop importante. En revanche, le cas de deux pics correspond au cas où les bords interne et externe sont distincts, et donc le contour elliptique comporte un bord interne elliptique et un bord externe elliptique.

Dans ce deuxième cas, l'étape 400 comprend alors la répartition des tangentes en deux sous-ensembles, d'après la distance entre le pixel correspondant à la tangente et le centre estimé du contour elliptique, le premier sous-ensemble comprenant l'ensemble des tangentes au bord interne du contour elliptique, et le deuxième sous-ensemble comprenant l'ensemble des tangentes au bord externe du contour elliptique.

Si deux sous-ensembles de tangentes ont été formés, alors l'étape 500 d'estimation des paramètres du contour elliptique est mise en oeuvre deux fois, une première fois pour l'estimation des paramètres du bord interne, avec le sous-ensemble des tangentes correspondant à ce bord, et une deuxième fois pour l'estimation des paramètres du bord externe, avec le sous-ensemble des tangentes correspondant à ce bord.

Ce mode de réalisation peut être mis en oeuvre de préférence quand l'objet que l'on cherche à détecter dans l'image est un anneau d'interface lanceur. Dans le cas d'une tuyère de moteur de moteur d'apogée à propergol liquide, cela peut être superflu car l'épaisseur d'une tuyère étant de l'ordre de 1 à 2 mm, un seul cercle sera détecté sur l'image.

Dans un mode de réalisation, l'étape 400 peut être mise en oeuvre systématiquement, et l'étape 500 est mise en oeuvre une seule fois s'il n'y a qu'un seul pic dans l'histogramme des tangentes et deux fois s'il y a deux pics. Ceci permet une plus grande précision dans l'estimation qui peut ensuite être réalisée de la position relative de la cible par rapport au véhicule.

## Revendications

**1.** Procédé pour la localisation d'une cible (C) par rapport à un véhicule (V), la cible (C) comprenant au moins un composant externe tridimensionnel (Cs) présentant une surface quadratique, le procédé étant mis en oeuvre par un calculateur (21, 31) et comprenant :

- l'acquisition (100) d'une image (I) de la cible comprenant une zone d'intérêt (Z) dans laquelle le composant externe (Cs) de la cible est visible sous la forme d'un contour elliptique,
- pour chacun d'une pluralité de pixels de la zone d'intérêt (Z) de l'image, le calcul (200) d'un gradient d'intensité de l'image autour du pixel, et la détermination, à partir du gradient d'intensité, des paramètres d'une droite présentant une direction normale au gradient en ledit pixel,
- la sélection (300), parmi l'ensemble des droites déterminées, d'un ensemble de droites tangentes au contour elliptique, et
- l'estimation (500) des paramètres du contour elliptique sur l'image à partir des paramètres des tangentes au contour elliptique,

dans lequel l'étape de sélection (300) des droites tangentes au contour elliptique comprend :

- le calcul, pour chaque pixel, d'un angle formé par la droite présentant une direction normale au gradient en ledit pixel et par une droite reliant ledit pixel à un centre estimé du contour elliptique, et
- la sélection de la droite présentant une direction normale au gradient en ledit pixel comme tangente au contour elliptique si l'angle calculé est égal à un angle droit moyennant une tolérance prédéterminée.

2. Procédé selon la revendication 1, dans lequel la zone d'intérêt est une ellipse délimitée autour du contour elliptique de l'image, et le calcul d'un gradient d'intensité est mis en oeuvre pour l'ensemble des pixels de la zone d'intérêt de l'image.

3. Procédé selon l'une des revendications précédentes, dans lequel l'estimation des paramètres du contour elliptique est mise en oeuvre par un algorithme de moindres carrés.

4. Procédé selon l'une des revendications précédentes, comprenant en outre, une fois les tangentes au contour elliptique sélectionnées, l'élaboration (400) d'un histogramme desdites tangentes en fonction de la distance entre un centre estimé du contour elliptique et le pixel en lequel est calculée respectivement chaque tangente.

5. Procédé selon la revendication 4, dans lequel l'histogramme comprend deux pics correspondants respectivement à un bord interne et un bord externe sur l'image du contour elliptique, et le procédé comprend alors la répartition des tangentes en deux ensembles correspondant respectivement à chaque bord, et
l'étape d'estimation (500) des paramètres du contour elliptique sur l'image est mise en oeuvre respectivement pour le bord interne et pour le bord externe, à partir des paramètres des tangentes appartenant respectivement aux deux ensembles.

6. Procédé selon l'une des revendications précédentes, dans lequel l'étape d'acquisition (100) de l'image de la cible comprenant une zone d'intérêt comprend une étape d'acquisition d'une image de la cible dans laquelle le composant tridimensionnel externe est visible sous la forme d'un contour elliptique, et une étape de délimitation d'une zone d'intérêt autour dudit contour.

7. Procédé selon la revendication précédente, dans lequel la délimitation de la zone d'intérêt est mise en oeuvre à partir d'une estimation précédente de la position de la cible relativement au véhicule et de la trajectoire du véhicule par rapport à la cible.

8. Produit programme d'ordinateur, comprenant des instructions de code pour la mise en oeuvre du procédé selon l'une des revendications précédentes, lorsqu'il est mis en oeuvre par un calculateur (21, 31).

9. Calculateur (21, 31) configuré pour la mise en oeuvre du procédé selon l'une des revendications 1 à 7.


**Patentansprüche**

1. Verfahren zum Lokalisieren eines Ziels (C) relativ zu einem Fahrzeug (V), wobei das Ziel (C) mindestens eine dreidimensionale Außenkomponente (Cs) mit einer quadratischen Oberfläche aufweist, wobei das Verfahren von einem Rechner (21, 31) durchgeführt wird und aufweist:

- die Erfassung (100) eines Bilds (I) des Ziels, wobei das Bild eine Zone von Interesse (Z) aufweist, in welcher die Außenkomponente (Cs) des Ziels in Form einer elliptischen Kontur sichtbar ist,
- für jedes von mehreren Pixel-Elementen der Zone von Interesse (Z) des Bilds, die Berechnung (200) eines Intensitätsgradienten des Bilds um das Pixel-Element herum und, ausgehend von dem Intensitätsgradienten, die Bestimmung von Parametern einer Geraden, die an dem Pixel-Element eine zum Gradienten senkrechte Richtung hat,
- die Auswahl (300) einer Menge von Tangentengeraden der elliptischen Kontur aus der Menge der bestimmten Geraden, und
- die Schätzung (500) der Parameter der elliptischen Kontur auf dem Bild ausgehend von den Parametern der Tangenten der elliptischen Kontur,

in welchem der Schritt der Auswahl (300) der Tangentengeraden der elliptischen Kontur aufweist:

- für jedes Pixel-Element, die Berechnung eines Winkels, der von der Geraden, die an dem Pixel-Element eine zum Gradienten senkrechte Richtung hat, und von einer Geraden, die das Pixel-Element mit einer geschätzten Mitte der elliptischen Kontur verbindet, gebildet wird, und
- die Wahl der Geraden, die an dem Pixel-Element eine zum Gradienten senkrechte Richtung hat, als Tangente der elliptischen Kontur, falls der berechnete Winkel gleich einem rechten Winkel mit einer vorgegebenen Toleranz ist.

2. Verfahren nach Anspruch 1, in welchem die Zone von Interesse eine begrenzte Ellipse um die elliptische Kontur des Bilds ist, und die Berechnung eines Intensitätsgradienten für alle Pixel-Elemente der Zone von Interesse des Bilds durchgeführt wird.

3. Verfahren nach einem der vorstehenden Ansprüche, in welchem die Schätzung der Parameter der elliptischen Kontur mit einem Algorithmus kleinster Quadrate durchgeführt wird.

4. Verfahren nach einem der vorstehenden Ansprüche, ferner aufweisend, sobald die Tangenten der elliptischen Kontur gewählt sind, die Ausarbeitung (400) eines Histogramms der Tangenten als Funktion des Abstands zwischen einer geschätzten Mitte der elliptischen Kontur und dem Pixel-Element, an welchem jeweils die jeweilige Tangente berechnet ist.

5. Verfahren nach Anspruch 4, in welchem das Histogramm zwei Spitzen aufweist, die einem Innenrand bzw. einem Außenrand der elliptischen Kontur auf dem Bild entsprechen, und das Verfahren dann die Verteilung der Tangenten auf zwei Mengen, die jeweils einem Rand entsprechen, aufweist, und
ausgehend von den Parametern der Tangenten, die jeweils zu den zwei Mengen gehören, der Schritt der Schätzung (500) der Parameter der elliptischen Kontur auf dem Bild jeweils für den Innenrand und den Außenrand durchgeführt wird.

6. Verfahren nach einem der vorstehenden Ansprüche, in welchem der Schritt der Erfassung (100) des Bilds des Ziels, das eine Zone von Interesse aufweist, einen Schritt der Erfassung eines Bilds des Ziels, auf dem die dreidimensionale Außenkomponente in Form einer elliptischen Kontur sichtbar ist, und einen Schritt einer Begrenzung einer Zone von Interesse um die Kontur herum aufweist.

7. Verfahren nach dem vorstehenden Anspruch, in welchem die Begrenzung der Zone von Interesse ausgehend von einer vorausgehenden Schätzung der Position des Ziels relativ zu dem Fahrzeug und ausgehend von der Flugbahn des Fahrzeugs bezüglich des Ziels durchgeführt wird.

8. Computerprogrammprodukt, aufweisend Code-Befehle zum Durchführen des Verfahrens nach einem der vorstehenden Ansprüche, wenn es von einem Rechner (21, 31) ausgeführt wird.

9. Rechner (21, 31), der zum Durchführen des Verfahrens nach einem der Ansprüche 1 bis 7 konfiguriert ist.

**Claims**

1. Method for locating a target (C) relative to a vehicle (V), the target (C) comprising at least one three-dimensional external component (Cs) presenting a quadratic surface, the method being implemented by a computer (21, 31) and comprising:

- capturing (100) an image (I) of the target comprising an area of interest (Z) in which the external component (Cs) of the target is visible in the form of an elliptical contour,
- for each of a plurality of pixels of the area of interest (Z) in the image, calculating (200) an intensity gradient of the image around the pixel, and determining, based on the intensity gradient, the parameters of a line presenting a direction normal to the gradient at said pixel,
- selecting (300), among the set of determined lines, a set of lines that are tangents to the elliptical contour, and
- estimating (500) the parameters of the elliptical contour on the image based on the parameters of the tangents to the elliptical contour,

wherein the step of selecting (300) lines that are tangents to the elliptical contour comprises:

- calculating, for each pixel, an angle formed by the line presenting a direction normal to the gradient at said pixel and by a line connecting said pixel to an estimated center of the elliptical contour, and
- selecting the line presenting a direction normal to the gradient at said pixel as a tangent to the elliptical contour if the calculated angle is equal to a right angle plus or minus a predetermined tolerance.

2. Method according to claim 1, wherein the area of interest is an ellipse delineated around the elliptical contour of the image, and an intensity gradient is calculated for all pixels of the area of interest in the image.

3. Method according to one of the preceding claims, wherein the parameters of the elliptical contour are estimated by a least squares algorithm.

4. Method according to one of the preceding claims, further comprising, once the tangents to the elliptical contour have been selected, producing (400) a histogram of said tangents as a function of the distance between an estimated center of the elliptical contour and the pixel at which each tangent is respectively calculated.

5. Method according to claim 4, wherein the histogram comprises two peaks respectively corresponding to an inner edge and an outer edge of the elliptical contour on the image, and the method then comprises dividing the tangents into two sets respectively corresponding to each edge, and
the step (500) of estimating the parameters of the elliptical contour on the image is carried out respectively for the inner edge and for the outer edge, based on the parameters of the tangents respectively belonging to the two sets.

6. Method according to one of the preceding claims, wherein the step of capturing (100) the image of the target comprising an area of interest comprises a step of capturing an image of the target in which the three-dimensional external component is visible in the form of an elliptical contour, and a step of delineating an area of interest around said contour.

7. Method according to the preceding claim, wherein the delineation of the area of interest is implemented based on a previous estimate of the position of the target relative to the vehicle and based on the trajectory of the vehicle relative to the target.

8. Computer program product, comprising code instructions for implementing the method according to one of the preceding claims, when it is implemented by a computer (21, 31).

9. Computer (21, 31) configured to implement the method according to one of claims 1 to 7.

[Fig. 1]

```
┌ ─ ─ ─ ─ ─ ─ ─ ─ ─ ─ ─ ─ ─ ─ ─ ─ ─ ┐
│      Acquisition image par le capteur       │ ─── 90
└ ─ ─ ─ ─ ─ ─ ─ ─ ─ ─ ─ ─ ─ ─ ─ ─ ─ ┘

                    ↓

┌─────────────────────────────────┐
│   Acquisition image avec zone d'intérêt     │ ─── 100
└─────────────────────────────────┘

                    ↓

┌─────────────────────────────────┐
│  Calcul de normales aux gradients d'intensité │ ─── 200
└─────────────────────────────────┘

                    ↓

┌─────────────────────────────────┐
│         Sélection de tangentes          │ ─── 300
└─────────────────────────────────┘

                    ↓

┌ ─ ─ ─ ─ ─ ─ ─ ─ ─ ─ ─ ─ ─ ─ ─ ─ ─ ┐
│        Histogramme des tangentes        │ ─── 400
└ ─ ─ ─ ─ ─ ─ ─ ─ ─ ─ ─ ─ ─ ─ ─ ─ ─ ┘

                    ↓

┌─────────────────────────────────┐
│    Estimation des paramètres du contour    │ ─── 500
│              elliptique                 │
└─────────────────────────────────┘
```

# FIG. 1

[Fig. 2a]

## FIG. 2a

[Fig. 2b]

## FIG. 2b

[Fig. 3]

## FIG. 3

[Fig. 4]

## FIG. 4

[Fig. 5]

FIG. 5

[Fig. 6]

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. PETIT et al.** Vision-based Space Autonomous Rendezvous : A Case Study. *2011 IEEE/RSJ International Conférence on Intelligent Robots and Systems,* Septembre 2011, 25-30
- **JEAN-NICOLAS OUELLET et al.** Precise ellipse estimation without contour point extraction. *MACHINE VISION AND APPLICATIONS, SPRINGER, BERLIN, DE,* 07 Mai 2007, vol. 21 (1), 59-67
- **CAI JIA et al.** An efficient circle detector not relying on edge détection. *ADVANCES IN SPACE RESEARCH, ELSEVIER, AMSTERDAM, NL,* 21 Mars 2016, vol. 57 (11), 2359-2375
- **LIU CHANG et al.** Effective Method for ellipse extraction and intégration for spacecraft images. *OPTICAL ENGINEERING, SOC. OF PHOTO-OPTICAL INSTRUMENTATION ENGINEERS, BELLINGHAM,* 01 Mai 2013, vol. 52 (5), 57002